(19) Europäisches Patentamt
European Patent Office
Office européen des brevets

(11) **EP 3 774 159 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **19713396.0**

(22) Anmeldetag: **19.03.2019**

(51) Internationale Patentklassifikation (IPC):
*B23K 26/14* (2014.01)     *B23K 26/24* (2014.01)

(52) Gemeinsame Patentklassifikation (CPC):
**B23K 26/1436; B23K 26/24**

(86) Internationale Anmeldenummer:
**PCT/EP2019/056839**

(87) Internationale Veröffentlichungsnummer:
**WO 2019/197119 (17.10.2019 Gazette 2019/42)**

(54) **VERFAHREN UND VORRICHTUNG ZUM LASERSCHWEISSEN**

LASER WELDING METHOD AND DEVICE

PROCÉDÉ ET DISPOSITIF DE SOUDAGE LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.04.2018   DE 102018108824**

(43) Veröffentlichungstag der Anmeldung:
**17.02.2021   Patentblatt 2021/07**

(73) Patentinhaber: **Rofin Sinar Laser GmbH**
**22113 Hamburg (DE)**

(72) Erfinder:
• **FORSTER, Oliver**
**21514 Güster (DE)**
• **KALLAGE, Peter**
**21037 Hamburg (DE)**
• **SCHÜTTLER, Jens**
**21035 Hamburg (DE)**

(74) Vertreter: **Schlögl, Markus**
**Meissner Bolte Patentanwälte**
**Rechtsanwälte Partnerschaft mbB**
**Bankgasse 3**
**90402 Nürnberg (DE)**

(56) Entgegenhaltungen:
**EP-A1- 1 010 493     DE-A1- 19 905 739**

• **FABBRO R: "Melt pool and keyhole behaviour analysis for deep penetration laser welding;Melt pool and keyhole behaviour analysis for deep penetration laser welding", JOURNAL OF PHYSICS D: APPLIED PHYSICS, INSTITUTE OF PHYSICS PUBLISHING LTD, GB, Bd. 43, Nr. 44, 15. Oktober 2010 (2010-10-15), Seite 445501, XP020199386, ISSN: 0022-3727, DOI: 10.1088/0022-3727/43/44/445501 in der Anmeldung erwähnt**

EP 3 774 159 B1

**Beschreibung**

Die Erfindung betrifft ein Verfahren und eine Vorrichtung zum Laserschweißen. Die Erfindung betrifft insbesondere ein Verfahren zum Laserschweißen von Werkstücken, wobei ein auf eine Werkstückoberfläche gerichteter Laserstrahl eine derartige Strahlungsintensität aufweist, dass das Werkstückmaterial des zumindest einen zu schweißenden Werkstücks im Bereich eines Laserfokus aufgeschmolzen wird. Im Bereich des Laserfokus bildet sich hierbei eine Dampfkapillare, die zumindest abschnittsweise von einem flüssigen Schmelzbad umgeben ist. Zur Erzeugung einer Schweißnaht wird der Laserfokus relativ zur Werkstückoberfläche in einer Vorschubrichtung bewegt.

Die Erfindung betrifft ferner eine zur Durchführung des Verfahrens eingerichtete Vorrichtung zum Laserschweißen mit einem Träger für zumindest ein zu schweißendes Werkstück, einer Laserquelle und einer Laseroptik zum Erzeugen eines in einem Laserfokus auf eine Werkstückoberfläche gerichteten Laserstrahls und einer Gaszuführung zum Erzeugen eines auf die zumindest eine Werkstückoberfläche gerichteten Gasstroms. Zumindest die Laseroptik und der Träger sind derart zueinander beweglich gelagert, dass der Laserfokus zumindest über einen Abschnitt der zumindest einen Werkstückoberfläche in Vorschubrichtung führbar ist.

Laserschweißen, also das Schweißen von einem oder mehreren, insbesondere metallischen, Werkstücken mit Hilfe von Laserstrahlung ist gängiger Stand der Technik. Im Allgemeinen wird hierzu ein Laserstrahl auf eine Werkstückoberfläche gerichtet bzw. fokussiert und das Werkstückmaterial im Bereich des Laserfokus lokal aufgeschmolzen. Der Laserstrahl weist typischerweise eine hohe Strahlungsintensität auf, so dass sich eine Schweiß- bzw. Dampfkapillare (engl.: "keyhole") im Bereich des Laserfokus bildet, aus der Metalldampf entweicht. Die Dampfkapillare ist zumindest randseitig mit flüssiger Schmelze umgeben. Zur Ausbildung einer Schweißnaht wird der Laserstrahls relativ zur Werkstückoberfläche bewegt.

Beim Schweißen mit Laserstrahlung ist es üblich, ein Inertgas, beispielsweise Helium (He), Argon (Ar) oder Stickstoff ($N_2$), in die Umgebung der Schweißkapillare zu bringen, mit dem Ziel die Umgebungsluft und insbesondere den Luftsauerstoff zu verdrängen und so eine Oxidation der Schweißnaht zu vermeiden. Hierzu wird üblicherweise das Inertgas mit einer Düse, die bezüglich der Werkstückoberfläche in flachem Winkel ausgerichtet ist, eingebracht. Typischerweise erzeugt die Düse einen Schutz- bzw. Inertgasstrom, der bezüglich der Werkstückoberfläche in einem Winkel 0° - 30° verläuft. In Anwendungsfällen, in denen der Laserstrahl senkrecht zur Werkstückoberfläche verläuft, entspricht dies somit einem Winkel von 60° bis 90° bezüglich der Strahlrichtung bzw. bezüglich der optischen Achse der Laseroptik, die den Laserstrahl auf die Werkstückoberfläche oder zumindest auf einen Bereich nahe der Werkzeugoberfläche fokussiert. In jedem Fall wird die Gaszuführung derart ausgelegt, dass am Ort des Schmelzbades kein oder allenfalls ein geringer Staudruck entsteht. Dies erfolgt typischerweise über eine entsprechende Ausrichtung und Dimensionierung der Düse, die zur Bereitstellung des Inertgasstromes dient. Ziel ist es, das Schmelzbad möglichst wenig zu beeinflussen.

Aufgrund der unterschiedlichen Absorptionscharakteristik in Abhängigkeit der Wellenlänge treten insbesondere bei fasergeführten Lasersystemen verstärkt Probleme auf, wie Spritzer, Poren und ein damit verbundener Masseverlust, die die Qualität der hergestellten Schweißnaht negativ beeinflussen. Um dieser Problematik zu begegnen, wurde bereits eine Vielzahl von unterschiedlichen Maßnahmen vorgestellt, die beispielsweise auf einer Modifikation der Intensitätsverteilung auf der Werkstückoberfläche, etwa durch die Verwendung von Mehrfachfokusse, Doppelspots oder Ähnlichem beruhen.

Eine andere Herangehensweise wurde grundsätzlich von Fabbro et al. in "Experimental study of the dynamical coupling between the induced vapour plume and the melt pool for Nd-Yag CW laser welding", Journal of Physics D: Applied Physics, Vol. 39 (2006), S. 394-400 vorgestellt. Neben einer Untersuchung der Ausrichtung und Ausdehnung der Kapillarwand (engl.: "keyhole wall") wurde eine Stabilisierung des turbulenten Schmelzbades bei sehr niedrigen Vorschubgeschwindigkeiten durch Beaufschlagung mit einem Inertgasstrom erreicht, der unter einem Winkel von etwa 45° auf die Werkstückoberfläche auftrifft.

Aus Fabbro et al.: "Melt Pool and Keyhole Behaviour Analysis for Deep Penetration Laser Welding", Journal of Physics D: Applied Physics Vol. 43 (2010), S. 445-501 (Basis für den Oberbegriff des Anspruchs 1) ist jedoch bekannt, dass das hydrodynamische Verhalten des bei Tiefschweißprozessen gebildeten Schmelzbads kritisch von der Vorschubgeschwindigkeit, mit der der Laserfokus relativ zur Werkstückoberfläche bewegt wird, abhängt. Im Bereich niedriger Vorschubgeschwindigkeiten von bis zu 5 m/min liegt das so genannte "Rosenthal"-Regime vor, welches durch ein relativ großes Schmelzbad mit starken Oberflächenfluktuationen charakterisiert ist. In anderen Bereichen, insbesondere bei höheren Vorschub- bzw. Schweißgeschwindigkeiten, wird die Strömungsverhältnissen von anderen physikalischen Effekten maßgeblich beeinflusst. Das hydrodynamische Verhalten des gekoppelten Systems aus Dampfkapillare und Schmelzbad unterscheidet sich dann vom "Rosenthal"-Regime bereits qualitativ.

Es ist Aufgabe der vorliegenden Erfindung, Maßnahmen zur Verbesserung der Qualität von mittels Laserschweißen erstellten Schweißnähten anzugeben, die in einem weiten Bereich von Schweiß- bzw. Vorschubgeschwindigkeiten angewendet werden können.

Verfahrenstechnisch wird die vorstehend genannte Aufgabe gelöst durch ein Verfahren zum Laserschweißen mit den Merkmalen des Patentanspruchs 1.

Vorrichtungsseitig wird die vorstehend genannte Aufgabe gelöst durch eine Vorrichtung zum Laserschweißen mit den Merkmalen des Patentanspruchs 7. Vorteilhafte Ausgestaltungen der Erfindung sind Gegenstand der Unteransprüche.

Bei einem Verfahren zum Laserschweißen von Werkstücken wird ein Laserstrahl auf eine Werkstückoberfläche gerichtet. Der Laserstrahl weist eine derartige Strahlungsintensität auf, dass das Werkstückmaterial des zumindest einen zu schweißenden Werkstücks im Bereich eines Laserfokus aufgeschmolzen wird. Im Bereich des Laserfokus bildet sich hierbei eine Schweiß- bzw. Dampfkapillare (engl.: "keyhole"), die zumindest abschnittsweise, insbesondere umfänglich, von einem flüssigen Schmelzbad umgeben ist. Der Laserfokus wird zur Erzeugung einer Schweißnaht relativ zur Werkstückoberfläche in einer Vorschubrichtung bewegt. Gemäß der Erfindung wird das Schmelzbad zur Stabilisierung während des Schweißvorgangs durch Beaufschlagung mit einem auf die Werkstückoberfläche gerichteten Gasstrom mechanisch beansprucht.

Kern der Erfindung ist somit die Erkenntnis, dass eine mechanische Beanspruchung des Schmelzbades, d. h. eine Krafteinwirkung auf das Schmelzbad währen des Schweißprozesses, überraschender Weise eine Stabilisierung desselbigen bewirkt. Dies hat insbesondere eine reduzierte Spritzer- und Porenbildung und -damit verbunden- weniger Materialverlust zu Folge. Die Qualität der erstellten Schweißnaht kann somit entscheidend verbessert werden, indem die Beaufschlagung mit Gas in Abkehr zur gängigen Lehre derart erfolgt, dass eine nicht vernachlässigbare Kraft auf das Schmelzbad ausgeübt wird. In gängigen Schweißverfahren wird ein Inert- bzw. Schutzgasstrom derart dimensioniert und gerichtet, dass zwar der Sauerstoff aus der unmittelbaren Umgebung des Laserfokus verdrängt wird, eine Beeinflussung des Schmelzbads durch den Inertgasstrom allerdings gleichzeitig vermieden wird.

Eine mechanische Beanspruchung des Schmelzbades wird insbesondere dann erreicht, wenn die Beaufschlagung mit Gas im Wesentlichen in Richtung einer Strahlachse bzw. einer dem Laserstrahl zugeordneten optischen Achse erfolgt. Abhängig von der Stoßart der Schweißverbindung bietet es sich an, das Schmelzbad in einem steilen Winkel zu beaufschlagen, also beispielsweise in einer Richtung, die nicht oder nur wenig von einer senkrecht zur Werkstückoberfläche am Ort des Laserfokus verlaufenden Flächennormalen abweicht. Ziel ist es, eine nicht vernachlässigbare Kraftbeaufschlagung zu erreichen.

Das das Werkstück beaufschlagende Gas ist beispielsweise ein Schutz- oder Inertgas, wie etwa ein Edelgas, insbesondere Helium (He) oder Argon (Ar), oder ein anderes reaktionsträges Gas, wie etwa Stickstoff ($N_2$). In anderen Anwendungsbereichen, insbesondere wenn eine Oxidation der Schweißnaht keine oder nur eine verminderte Rolle spielt, ist vorgesehen, das Schmelzbad mit Druckluft oder Sauerstoff ($O_2$) zu beaufschlagen.

Der Ort oder der Bereich des Laserfokus soll im Rahmen dieser Spezifikation insbesondere so verstanden werden, dass hiermit im Wesentlichen der Bereich umfasst ist, in dem der Laserstrahl auf die Werkstoffoberfläche trifft. Insbesondere beim Laserschweißen von Blechen ist es üblich, den Laserstrahl in einem Fokuspunkt zu fokussieren, der geringfügig oberhalb oder unterhalb der Werkstückoberfläche liegt. In diesem Fall liegt somit an der Werkstückoberfläche ein konvergentes oder divergentes Strahlungsfeld vor. Mit anderen Worten sind im Rahmen dieser Erfindung auch Ausgestaltungen umfasst, bei denen das Strahlungsfeld in einem Fokuspunkt eine minimale Querschnittsausdehnung annimmt, der geringfügig von der Werkstückoberfläche, insbesondere um einige wenige Blechdicken, beabstandet ist.

Gemäß der Erfindung wird der Laserstrahl zur Erzeugung der Schweißnaht relativ zur Werkstückoberfläche in der Vorschubrichtung mit einer Vorschubgeschwindigkeit bewegt und ein hydrodynamischer Staudruck des das Werkstück beaufschlagenden Gasstroms in Abhängigkeit der Vorschubgeschwindigkeit derart eingestellt, dass der hydrodynamische Staudruck zumindest halb so groß und höchstens viermal so groß ist wie ein proportional zur Vorschubgeschwindigkeit gewählter Referenzstaudruck. Der Referenzstaudruck $p_s$ ist in Abhängigkeit der Vorschubgeschwindigkeit $v_w$ durch die Beziehung

$$p_s = k * v_w$$

gegeben, wobei der Proportionalitätsfaktor k im SI-Einheitensystem $k = 7{,}2 * 10^3 \frac{Pa\,s}{m}$ beträgt. Mit anderen Worten beträgt der in Pascal angegebene Referenzstaudruck $p_s$ dem 120fachen der in m/min (Meter pro Minute) angegebenen Vorschubgeschwindigkeit $v_w$. Mit einem derartig dimensionierten Gasstrom lässt sich das Schmelzbad in einer Vielzahl von verschiedenen Anwendungsfällen stabilisieren.

In Ausgestaltung erfolgt die Beaufschlagung des Schmelzbades mit Gas mittels eines in Vorschubrichtung oder entgegen der Vorschubrichtung gerichteten Gasstromes. Die Strömungsrichtung des zugeführten Gasstromes verläuft bezüglich einer dem Laserstrahl zugeordneten optischen Achse in einem Winkel, der weniger als 35° beträgt. In diesem Sinne wird somit insbesondere vorgeschlagen, insbesondere eine den Gasstrom bereitstellende Düse relativ steil zur Werkstückoberfläche anzustellen, um eine auf die Oberfläche des Schmelzbades gerichtete Kraft auszuwirken.

Die dem Laserstrahl zugeordnete optische Achse ist insbesondere von der Geometrie einer den Laserstrahl fokussierenden Laseroptik definiert.

In Ausgestaltung erfolgt die Beaufschlagung des Schmelzbades mit Gas mittels eines in Vorschubrichtung gerichteten Gasstromes, der bezüglich der optischen Achse in einem Winkel verläuft, der weniger als 10° beträgt. In einer möglichen Anwendung ist die Strömungsrichtung des Gasstroms in einem kleinen Winkel von bis zu 10° "stechend" in Vorschubrichtung orientiert, wenn der Laserstrahl entsprechend senkrecht zur Oberfläche eines zu schweißenden Werkstücks gerichtet wird.

Alternativ oder zusätzlich erfolgt die Beaufschlagung des Schmelzbades mit Gas mittels eines entgegen der Vorschubrichtung gerichteten Gasstromes, also "schleppend". Die entgegen der Vorschubrichtung erfolgende "schleppende" Beaufschlagung erfolgt bezüglich der dem Laserstrahl zugeordneten optischen Achse bevorzugt unter einem Winkel, der weniger als 30° beträgt.

In Weiterbildung erfolgt eine gleichzeitige Beaufschlagung des Schmelzbades mit Gas mit zumindest einem in Vorschubrichtung gerichteten Gasstrom und zumindest einem weiteren, entgegen der Vorschubrichtung gerichteten Gasstrom. In diesem Zusammenhang ist insbesondere vorgesehen, dass die Gaszuführung zumindest zwei Düsen zur Bereitstellung von Gasströmen aufweist, die entsprechend in Vorschubrichtung bzw. entgegen der Vorschubrichtung gerichtet sind.

In Ausgestaltung erfolgt die Beaufschlagung der Werkstückoberfläche mit Gas im Wesentlichen in Richtung des Laserstrahls bzw. der optischen Achse. Insbesondere bei senkrechter Ausrichtung des Laserstrahls auf die Werkstückoberfläche erfolgt die Beaufschlagung des Schmelzbades mit Gas somit senkrecht zur Werkstückoberfläche, also in Richtung der Flächennormalen am Ort des Laserfokus.

In Ausgestaltung wird der Laserstrahl zumindest näherungsweise senkrecht zur Werkstückoberfläche, also in Richtung der Flächennormalen am Ort des Laserfokus, ausgerichtet. Der Laserstrahl wird in diesem Zusammenhang bevorzugt in einer Strahlrichtung auf die Werkstückoberfläche gerichtet, die bezüglich der Flächennormalen am Ort des Laserfokus um weniger als 5° abweicht.

In Abweichung hiervon kann beispielsweise bei einer zu erstellenden Kehlnaht der Laserstrahl auch unter einem größeren Winkel bezüglich der Werkstückoberflächen angestellt werden.

In Ausgestaltung erfolgt die Beaufschlagung der Werkstückoberfläche mit Gas koaxial zur Strahlrichtung des Laserstrahls. Für derartige Ausgestaltungen ist insbesondere vorgesehen, Vorrichtungen zum Laserschweißen einzusetzen, deren Gaszuführungen Strömungsrichtungen definieren, die koaxial zu einer optischen Achse einer Laseroptik verlaufen, die den Laserstrahl in Strahlrichtung auf die Werkstückoberfläche richtet. Derartige Ausführungen weisen in vorteilhafter Weise eine gewisse Richtungsunabhängigkeit auf, da eine aufwändige Neuorientierung der den Gasstrom bereitstellenden Düsen insbesondere bei herzustellenden Schweißnähten mit nichtlinearem Verlauf in bzw. entgegen der Vorschubrichtung entfallen kann.

In Ausgestaltung ist der Gasstrom auf die Werkstückoberfläche in einen Bereich um den Laserfokus gerichtet, dessen Radius maximal das doppelte eines Düsenmündungsdurchmessers einer den Gasstrom bereitstellenden Düse beträgt. Mit anderen Worten wird der Gasstrom gezielt auf einen begrenzten Bereich der Werkstückoberfläche gerichtet, in dem das flüssige Schmelze enthaltende Schmelzbad zu finden ist, um insbesondere auf dessen Oberfläche eine Kraft auszuwirken. Die gezielte Ausrichtung des Gasstroms auf den Bereich um den Laserfokus stellt sicher, dass die Wechselwirkung mit dem Gasstrom nicht ausschließlich auf das Ablenken einer im Bereich der Dampfkapillare etwaig gebildeten Plasmafahne beschränkt ist. Der Gasstrom staut sich im Bereich des Schmelzbades bzw. bildet dort einen ausgeprägten Staupunkt aus.

In Ausgestaltung ist vorgesehen, dass der Gasstrom einen Volumenstrom aufweist, der insbesondere in Abhängigkeit eines Durchflussquerschnitts der Gaszuführung geeignet angepasst wird. Der Durchflussquerschnitt ist beispielsweise vom Düsenmündungsdurchmessers einer den Gasstrom bereitstellenden Düse begrenzt. Der den Durchflussquerschnitt durchströmende Gasstrom wird ganz allgemein so dimensioniert, dass auf der einen Seite eine nicht vernachlässigbare Kraft auf das Schmelzbad ausgeübt wird, auf der anderen Seite ein Austreiben von Material aus dem Schmelzbad zumindest weitgehend vermieden wird.

In Ausgestaltung erfolgt die Dimensionierung des Gasstroms unter der Annahme, dass der hydrodynamische Staudruck $p_d$ von der Dichte $\rho$ und einer Strömungsgeschwindigkeit $v_g$ des Gases durch die Beziehung $p_d = \frac{1}{2}\rho * v_g{}^2$ gegeben ist. Ferner wird in Ausgestaltung angenommen, dass die Strömungsgeschwindigkeit $v_g$ sich gemäß $v_g = \frac{VS}{A}$, aus dem Quotienten des Volumenstroms VS des Gasstroms und dem vom Volumenstrom VS durchströmten Durchflussquerschnitt A ergibt. Der Durchflussquerschnitt ist beispielsweise von der Größe einer insbesondere verstellbaren Düsenmündungsöffnung einer Düse oder einer insbesondere verstellbaren Durchflussöffnung einer Drossel oder einer Reduzierung bestimmt, die von dem Gasstrom durchströmt wird.

In Ausgestaltung beträgt die Vorschubgeschwindigkeit mehr als 5 m/min, insbesondere zumindest 6 m/min. Die vorstehend beschriebenen Maßnahmen sind insbesondere dazu geeignet, eine Verbesserung bei Schweißvorgängen zu bewirken, bei denen das Schmelzbad kein für das so genannte Rosenthal-Regime charakteristisches hydrodynamisches Verhalten aufweist.

Eine Vorrichtung zum Laserschweißen ist zur Durchführung des vorstehend beschriebenen Verfahrens ausgebildet. Die Vorrichtung zum Laserschweißen, insbesondere Tiefschweißen, umfasst einen Träger für zumindest ein zu schweißendes Werkstück, eine Laserquelle, insbesondere fasergeführte Laser, Gaslaser, Festkörperlaser oder Faserlaser, und eine Laseroptik zum Erzeugen eines auf eine Werkstückoberfläche gerichteten Laserstrahls und eine Gaszuführung, insbesondere mit einer oder mehreren Düsen, zum Erzeugen eines auf die zumindest eine Werkstückoberfläche gerichteten Gasstroms. Zumindest die Laseroptik und der Träger sind derart zueinander beweglich gelagert, dass der Laserstrahl zumindest über einen Abschnitt entlang der Werkstückoberfläche in Vorschubrichtung führbar ist. Gemäß der Erfindung ist die Gaszuführung dazu ausgelegt, ein im Bereich eines Laserfokus gebildetes Schmelzbad durch Beaufschlagung mit Gas mechanisch zu beanspruchen. Die damit verbundenen vorteilhaften Effekte auf den Schweißvorgang lassen sich unmittelbar aus der vorstehenden Beschreibung mit Bezug auf das korrespondierende Verfahren zum Laserschweißen ableiten, so dass auf die bisherigen Ausführungen verwiesen wird.

In Ausgestaltung weist die Gaszuführung zum Bereitstellen des Gasstromes zumindest eine auf die Werkstückoberfläche in Vorschubrichtung oder entgegen der Vorschubrichtung gerichtete Düse auf. Die Düse ist bezüglich einer optischen Achse der Laseroptik ausrichtbar oder ausgerichtet. Die Düse ist bezüglich der optischen Achse insbesondere verstellbar in einem Winkel bezüglich der optischen Achse ausrichtbar, der weniger als 30° beträgt. In einem anderen Ausführungsbeispiel ist die Düse in einem Winkel von weniger als 30° bezüglich der optischen Achse ausgerichtet. Die Vorrichtung zum Laserschwei-ßen, insbesondere ein zumindest die Düse und die Laseroptik umfassender Bearbeitungskopf, ist somit dazu ausgebildet und bezüglich dem Träger für das zu schweißende Werkstück angeordnet, dass die Beaufschlagung mit Gas bei entsprechender Orientierung der optischen Achse in einem steilen Winkel bezüglich der Werkstückoberfläche, also beispielsweise im Wesentlichen entlang einer senkrecht zur Werkstückoberfläche verlaufenden er Flächennormalen erfolgen kann, um das Schmelzbad während des Schweißvorgangs mechanisch zu beanspruchen.

In Ausgestaltung ist eine in Vorschubrichtung gerichtete Düse bezüglich der optischen Achse in einem Winkel ausrichtbar oder ausgerichtet, der weniger als 10° beträgt. Alternativ oder zusätzlich ist eine entgegen der Vorschubrichtung gerichtete Düse bezüglich optischen Achse in einem Winkel ausrichtbar oder ausgerichtet, der weniger als 30° beträgt. Es hat sich herausgestellt, dass im Allgemeinen bei "stechender" Beaufschlagung, also bei einer Beaufschlagung des Werkstücks mit einem Gasstrom, der in Vorschubrichtung gerichtet ist, kleinere Anstellwinkel zu bevorzugen sind, als bei einer "schleppenden", also entgegen der Vorschubrichtung erfolgenden Bearbeitung.

In Ausgestaltung ist eine optische Achse der den Laserstrahl auf die Werkstückoberfläche richtenden Laseroptik bezüglich einer am Ort des Laserfokus senkrecht zur Werkstückoberfläche verlaufenden Flächennormalen in einem Winkel ausrichtbar oder ausgerichtet, der weniger als 5° beträgt. Mit anderen Worten ist die Vorrichtung zum Laserschweißen derart ausgeführt, dass die Laseroptik insbesondere bezüglich des Trägers derart orientierbar ist, dass der bereitgestellte, insbesondere fokussierte, Laserstrahl beispielsweise im Wesentlichen parallel zur Flächennormalen auf das Werkstück gerichtet werden kann.

Vorzugsweise ist die zumindest eine Düse drehbar bezüglich einer senkrecht zur Werkstückoberfläche verlaufenden Achse gelagert, so dass die Düse auch bei zu erstellenden Schweißnähten, die keinen geradlinigen Verlauf haben, stets in oder entgegen der Vorschubrichtung orientierbar ist.

In Ausgestaltung weist die Gaszuführung zumindest eine Düse auf, die koaxial zu einer optischen Achse der Laseroptik ausgerichtet ist, so dass der von der Düse bereitgestellte Gasstrom zur Beaufschlagung des Werkstücks insbesondere koaxial zum Laserstrahl in Richtung einer am Ort des Laserfokus senkrecht zur Werkstückoberfläche verlaufenden Flächennormalen ausrichtbar oder ausgerichtet ist. Koaxiale Bearbeitungsköpfe mit einer derartig bezüglich der Laseroptik orientieren Gaszuführung sind in vorteilhafter Weise richtungsunabhängig ausgebildet, da diese, zumindest wenn die optische Achse der Laseroptik bei der Bearbeitung senkrecht zur Werkstückoberfläche ausgerichtet wird, nicht gedreht werden müssen, um den von der Düse bereitgestellten Gasstrom in oder entgegen der Vorschubrichtung geeignet zu positionieren.

In Ausgestaltung von Ausführungsbeispielen mit einer koaxial zur optischen Achse geführten Gaszuführung ist vorgesehen, dass die zumindest eine Düse eine den Durchflussquerschnitt begrenzende, insbesondere kreis- oder kreisringförmige, vorzugsweise verstellbare Düsenmündungsfläche aufweist. Diese Düsenmündungsfläche ist koaxial zur optischen Achse der Laseroptik angeordnet. Mit anderen Worten verläuft die optische Achse der Laseroptik beispielsweise direkt durch eine den Gasstrom bereitstellende Düse mit einer kreisförmigen Düsenmündungsfläche. Alternativ dazu ist die Düse als Ringdüse mit kreisringförmiger Düsenmündungsfläche ausgebildet, die konzentrisch bezüglich der optischen Achse angeordnet ist.

Erfindungsgemäß weist die Vorrichtung zum Laserschweißen eine Steuerungseinheit mit einer darin implementierten Steuerungsroutine zum automatischen Einstellen eines hydrodynamischen Staudrucks des von der Gaszuführung bereitgestellten Gasstroms in Abhängigkeit der Vorschubgeschwindigkeit gemäß einem der vorstehend bereits beschriebenen Verfahren auf. Hierzu ist insbesondere vorgesehen, dass die Steuereinheit mit einem den Durchflussquerschnitt des Gasstroms begrenzenden Stellelement, wie etwa einer Düse, oder einer Reduzierung mit verstellbarem Durchflussquerschnitt, in einer Wirkverbindung steht.

In Weiterbildung ist vorgesehen, den Gasstrom, insbesondere den von dem Gasstrom hervorgerufenen Staudruck, mittels der Steuereinheit während des Schweißvorgangs in Abhängigkeit der Vorschubgeschwindigkeit entsprechend der bereits beschriebenen Vorgehensweise aktiv zu steuern.

In Ausgestaltung weist die Laserquelle eine Laserleistung von zumindest 3kW, beispielsweise etwa 4kW oder 4,5kW auf.

In Ausgestaltung ist die Laserquelle dazu ausgebildet, Laserstrahlung mit einer Wellenlänge von weniger als 10μm, insbesondere von weniger als 5μm, bevorzugt von weniger als 2μm, besonders bevorzugt zwischen 350nm und 1300nm, bereitzustellen. Diese Laserquelle ist vorzugsweise ein fasergeführter Laser.

Im Folgenden werden mögliche Ausführungsbeispiele der Erfindung mit Bezug auf die Zeichnungen näher erläutert. Dabei zeigen:

Fig. 1: eine Vorrichtung zum Laserschweißen mit einer entgegen einer Vorschubrichtung orientierten Gaszuführung zum mechanischen Beanspruchen eines Schmelzbades in einer Schnittdarstellung;

Fig. 2: eine Vorrichtung zum Laserschweißen mit einer in Vorschubrichtung orientierten Gaszuführung zum mechanischen Beanspruchen eines Schmelzbades in einer Schnittdarstellung;

Fig. 3: eine Vorrichtung zum Laserschweißen mit koaxial zu einer optischen Achse orientierten Gaszuführung zum mechanischen Beanspruchen eines Schmelzbades in einer Schnittdarstellung.

Einander entsprechende Teile sind in allen Figuren mit den gleichen Bezugszeichen versehen.

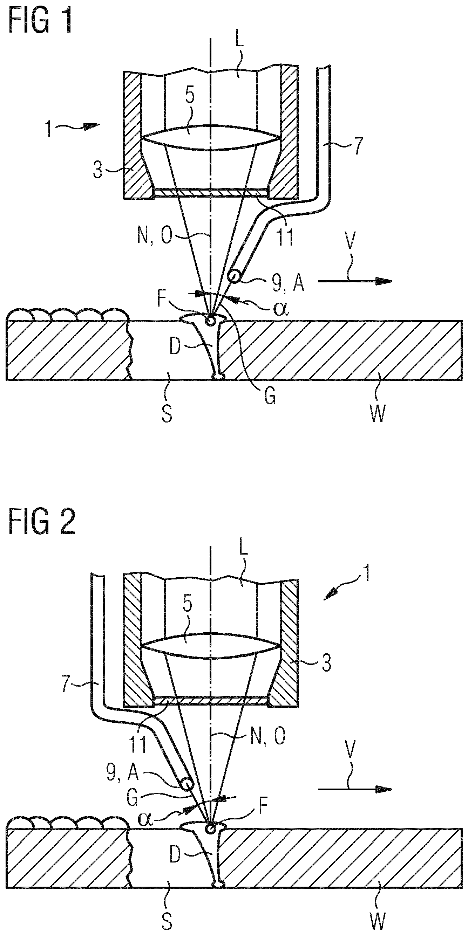

Figuren 1 und 2 illustrieren schematisch eine erste Ausführung einer Vorrichtung 1 zum Laserschweißen, die dazu ausgelegt ist, ein beim Schweißvorgang, insbesondere Tiefschweißen, gebildetes Schmelzbad S mechanisch zu beanspruchen.

Die Vorrichtung 1 weist einen Bearbeitungskopf 3 auf, welcher zumindest eine einen Laserstrahl L fokussierende Laseroptik 5 und eine Gaszuführung 7 mit Düse 9 aufweist. Eine nicht näher dargestellte Laserquelle, beispielsweise ein Festkörper-oder Faserlaser, erzeugt den Laserstrahl L. Eine optische Achse O der Laseroptik 5 ist im Wesentlichen senkrecht zu einer Werkstückoberfläche eines zu schweißenden Werkstücks W orientiert. Die Laseroptik 5 richtet den Laserstrahl L auf das Werkstück W, wobei die Laseroptik 5 bei der Bearbeitung von einem Fenster 11 geschützt ist. Der Laserfokus F des Laserstrahls L befindet sich im schematisch illustrierten Beispiel in der Nähe der Werkstückoberfläche und erzeugt dort, aufgrund der hohen Intensität des bereitgestellten Laserstrahls L, eine Dampfkapillare D mit Plasmafahne. Die Dampfkapillare D befindet sich im Schmelzbad S, d. h. sie ist von flüssiger Schmelze umgeben. Das Werkstück W ist ferner an einem nicht näher dargestellten Träger fixiert, der relativ zum Bearbeitungskopf 3 derart beweglich gelagert ist, dass das Werkstück W relativ zum bereitgestellten Laserstrahl L zur Erzeugung einer Schweißnaht in Vorschubrichtung V führbar ist bzw. geführt werden kann.

Zumindest die Gaszuführung 7 mit Düse 9 ist bezüglich der optischen Achse O drehbar gelagert, so dass es möglich ist, die Gaszuführung 7, wie in Figur 1 gezeigt, zur Erzeugung eines entgegen der Vorschubrichtung V gerichteten Gasstroms G oder, wie in Figur 2 gezeigt, zur Erzeugung eines in Vorschubrichtung V gerichteten Gasstroms G entsprechend zu orientieren. Die Düse 9 ist im dargestellten Beispiel bezüglich der optischen Achse O in einem Winkel α von etwa 25° orientiert. Da der Laserstrahl L senkrecht auf die Werkstückoberfläche gerichtet ist, entspricht dies einer Beaufschlagung des Schmelzbades S unter einem Winkel α von etwa 25° bezüglich einer am Ort des Laserfokus senkrecht zur Werkstückoberfläche verlaufenden Flächennormalen N.

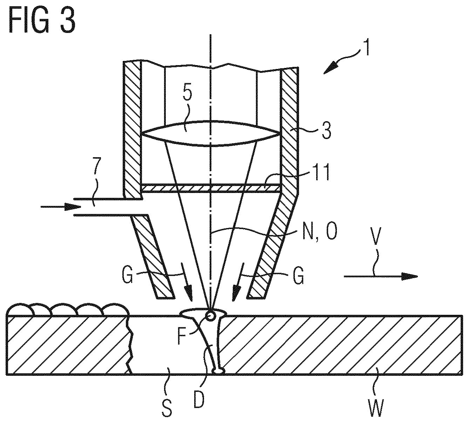

Figur 3 zeigt den schematischen Aufbau einer zweiten Ausführung einer Vorrichtung 1 zum Laserschweißen, die dazu ausgelegt ist, das beim Schweißvorgang gebildete Schmelzbad S mechanisch zu beanspruchen. Die Vorrichtung 1 zum Laserschweißen unterscheidet sich strukturell von dem in Figuren 1 und 2 gezeigten ersten Ausführungsbeispiel lediglich hinsichtlich der Geometrie der Gaszuführung, so dass auf die diesbezügliche Beschreibung verwiesen wird.

Der Bearbeitungskopf 3 des zweiten Ausführungsbeispiels ist als Koaxialkopf ausgebildet, d. h. die Gaszuführung 7 mit Düse 9 erzeugt einen Gasstrom G, der koaxial zur optischen Achse O verläuft. Bei senkrechter Ausrichtung des Laserstrahls L auf die Werkstückoberfläche beaufschlagt der Gasstrom G das Schmelzbad G somit im Wesentlichen in Richtung der Flächennormalen N, also unter einem Winkel α von etwa 0°.

Bei einem Verfahren zum Laserschweißen wird der Laserstrahl L entlang der Werkstückoberfläche in Vorschubrichtung V geführt, um das Werkstückmaterial im Bereich des Laserfokus F lokal aufzuschmelzen. Die Vorschubgeschwindigkeit $v_w$ entlang der Vorschubrichtung V beträgt insbesondere 1 m/min bis 50 m/min, beispielsweise 4 m/min bis 24 m/min. Der Winkel α, unter dem der Gasstrom G auf das Schmelzbad S auftrifft, beträgt vorzugsweise zwischen 0° und 35°. Eine den Durchflussquerschnitt A des Gasstroms G limitierende Düsenmündungsfläche der Düse 9 weist beispielsweise einen Durchmesser von einigen Millimetern, insbesondere weniger als 4 mm, beispielsweise etwa 3mm auf. Die Düsenmündungsfläche ist typischerweise einige wenige Millimeter, beispielsweise etwa zwischen 5 mm und 15 mm von der Schweiß- bzw. Dampfkapillare D beabstandet.

Die Beaufschlagung des Schmelzbades soll mit einer Kraft erfolgen, die dazu geeignet ist, dieses zu stabilisieren, allerdings soll auch vermieden werden, Material zumindest im merklichen Umfang auszutreiben. Zur Dimensionierung des Gasstroms G hat sich der hydrodynamische Druck $p_d$ als geeignete Kenngröße erwiesen, der sich vereinfacht aus der Dichte $\rho$ und der Strömungsgeschwindigkeit $v_g$ des ausströmenden Gases

$$p_d = \frac{1}{2}\rho * v_g{}^2$$

gemäß berechnen lässt. Die Strömungsgeschwindigkeit $v_g$ kann vereinfacht aus der Be-

$$v_g = \frac{VS}{A}$$

ziehung abgeleitet werden, wobei VS den Volumenstrom des Gasstroms G durch den Durchflussquerschnitt A bezeichnet. Der Volumenstrom VS beträgt bei typisch dimensionierten Düsen einige Liter pro Minute (l/min).

Der Gasstrom zur mechanischen Beanspruchung des Schmelzbades S wird vorzugsweise so eingestellt, dass der erzeugte hydrodynamische Staudruck $p_d$ innerhalb eines Intervalls um einen Referenzstaudruck $p_s$ liegt. Der Gasstrom wird in Abhängigkeit von Gasart, Düsenmündungsöffnungsfläche und Vorschubgeschwindigkeit $v_w$ so eingestellt, dass der Staudruck $p_d$ mindestens halb so groß ist wie ein Referenzstaudruck $p_s$ und höchstens viermal so groß wie der Referenzstaudruck, also $(0{,}5*p_s < p_d < 4*p_s)$.

Der Referenzstaudruck $p_s$ ist gegeben durch $p_s = k * v_w$, wobei der Proportionalitätsfaktor (k) im SI-Ein-

$$k = 7{,}2 * 10^3 \frac{Pa\,s}{m}$$

heitensystem beträgt.

In einem konkreten Ausführungsbeispiel wird ein Edelstahlblech der Stärke 1,5 mm geschweißt. Ein fasergeführter Laser stellt einen Laserstrahl L von 4,5 kW bereit. Die eingesetzte Laseroptik 5 weist beispielhaft ein Abbildungsverhältnis von 120:300 auf und bildet einen 200 $\mu$m Faserdurchmesser auf die Werkstückoberfläche ab, so dass dort ein Laserfokus mit Spotdurchmesser von etwa 0,5 mm entsteht. Bei einer Vorschubgeschwindigkeit $v_w$ von 12 m/min wird das Schmelzbad mit Argon beaufschlagt. Der bereitgestellte Gasstrom weist einen Volumenstrom von 20 l/min auf, der von einer Düse 9 begrenzt wird, deren Durchmesser 3 mm beträgt. Dies entspricht einem hydrodynamischen Staudruck $p_d$ von etwa 2 kPa, also in etwa dem 1,38fachen des Referenzstaudrucks $p_s$.

Die Erfindung wurde vorstehend mit Bezug auf bevorzugte Ausführungsbeispiele beschrieben. Es versteht sich jedoch, dass die Erfindung nicht auf die konkrete Ausgestaltung der gezeigten Ausführungsbeispiele beschränkt ist, vielmehr kann der zuständige Fachmann anhand der Beschreibung Variationen ableiten ohne von dem wesentlichen Grundgedanken der Erfindung, wie sie in den angehängten Ansprüchen definiert ist, abzuweichen.

## Bezugszeichen liste

| | |
|---|---|
| 1 | Vorrichtung |
| 3 | Bearbeitungskopf |
| 5 | Laseroptik |
| 7 | Gaszuführung |
| 9 | Düse |
| 11 | Fenster |
| | |
| O | optische Achse |
| L | Laserstrahl |
| W | Werkstück |
| S | Schmelzbad |
| D | Dampfkapillare |
| V | Vorschubrichtung |
| G | Gasstrom |
| $\alpha$ | Winkel |
| A | Durchflussquerschnitt |

## Patentansprüche

1. Verfahren zum Laserschweißen von Werkstücken (W), wobei ein auf eine Werkstückoberfläche gerichteter Laserstrahl (L) eine derartige Strahlungsintensität aufweist, dass das Werkstückmaterial des zumindest einen zu schweißenden Werkstücks (W) im Bereich eines Laserfokus (F) aufgeschmolzen wird, wobei sich im Bereich des Laserfokus (F) eine Dampfkapillare (D) bildet, die zumindest abschnittsweise von einem flüssigen Schmelzbad (S) umgeben ist, wobei der Laserstrahl (L) zur Erzeugung einer Schweißnaht relativ zur Werkstückoberfläche in einer Vorschubrichtung (V) bewegt wird, wobei das Schmelzbad (S) zur Stabilisierung während des Schweißvorgangs durch Beaufschlagung mit einem auf die Werkstückoberfläche gerichteten Gasstrom (G) mechanisch beansprucht wird, wobei der Laserstrahl (L) zur Erzeugung der Schweißnaht relativ zur Werkstückoberfläche in der Vorschubrichtung (V) mit einer Vorschubgeschwindigkeit ($v_w$) bewegt wird und ein hydrodynamischer Staudruck ($p_d$) des das Werkstück (W) beaufschlagenden Gasstroms (G) eingestellt wird, **dadurch gekennzeichnet, dass** der hydrodynamische Staudruck ($p_d$) des das Werkstück (W) beaufschlagenden Gasstroms (G) in Abhängigkeit der Vorschubgeschwindigkeit ($v_w$) derart eingestellt wird, dass der hydrodynamische Staudruck ($p_d$) zumindest halb so groß und höchstens viermal so groß ist wie ein proportional zur Vorschubgeschwindigkeit ($v_w$) gewählter Referenzstaudruck ($p_s$), der durch die Beziehung

$$p_s = k * v_w$$

gegeben ist, wobei der Proportionalitätsfaktor (k) im SI-Einheitensystem

$$k = 7{,}2 * 10^3 \frac{Pa\,s}{m}$$

beträgt.

2. Verfahren nach Anspruch 1, **dadurch gekennzeichnet, dass** die Beaufschlagung des Schmelzbades (S) mit Gas mittels eines in Vorschubrichtung (V) oder entgegen der Vorschubrichtung (V) gerichteten Gasstromes (G) erfolgt, wobei die Strömungsrichtung des Gasstromes (G) bezüglich einer dem Laserstrahl (L) zugeordneten optischen Achse (O) in einem Winkel ($\alpha$) verläuft, der weniger als 35° beträgt.

3. Verfahren nach Anspruch 2, **dadurch gekennzeichnet, dass** die Beaufschlagung des Schmelzbades (S) mit Gas mittels eines in Vorschubrichtung (V) gerichteten Gasstromes (G) erfolgt, der bezüglich der optischen Achse (O) in einem Winkel ($\alpha$) verläuft, der weniger als 10° beträgt und/oder die Beaufschlagung des Schmelzbades (S) mit Gas mittels eines entgegen der Vorschubrichtung (V) gerichteten Gasstromes (G) erfolgt, der bezüglich der optischen Achse (O) in einem Winkel ($\alpha$) verläuft, der weniger als 30° beträgt.

4. Verfahren nach einem der vorhergehenden Ansprüche, **dadurch gekennzeichnet, dass** der Gasstrom auf einen Bereich um den Laserfokus (F) gerichtet ist, dessen Radius maximal das doppelte eines Düsenmündungsdurchmessers einer den Gasstrom (G) bereitstellenden Düse (9) beträgt.

5. Verfahren nach einem der vorhergehenden Ansprüche, **dadurch gekennzeichnet, dass** der hydrodynamische Staudruck ($p_d$) von einer Dichte ($\rho$) und einer Strömungsgeschwindigkeit ($v_g$) des Gases durch die Beziehung $p_d = \frac{1}{2}\rho * v_g^2$ gegeben ist, wobei die Strömungsgeschwindigkeit ($v_g$) sich gemäß $v_g = \frac{VS}{A}$, aus dem Quotienten eines Volumenstroms (VS) des Gasstroms (G) und einem vom Volumenstrom (VS) durchströmten Durchflussquerschnitt (A) ergibt.

6. Verfahren nach einem der vorhergehenden Ansprüche, **dadurch gekennzeichnet, dass** die Vorschubgeschwindigkeit ($v_w$) mehr als 5 m/min, insbesondere zumindest 6 m/min beträgt.

7. Vorrichtung (1) zum Laserschweißen umfassend

- einen Träger für zumindest ein zu schweißendes Werkstück (W),
- eine Laserquelle und eine Laseroptik (5) zum Erzeugen eines auf eine Werkstückoberfläche gerichteten Laserstrahls (L),
- eine Gaszuführung (7) zum Erzeugen eines auf die zumindest eine Werkstückoberfläche gerichteten Gasstroms (G), wobei zumindest die Laseroptik (5) und der Träger derart zueinander beweglich gelagert sind, dass der Laserstrahl (L) zumindest über einen Abschnitt entlang der Werkstückoberfläche in Vorschubrichtung (V) führbar ist, wobei die Gaszuführung (7) dazu ausgelegt ist, ein im Bereich eines Laserfokus (F) gebildetes Schmelzbad (S) durch Beaufschlagung mit Gas mechanisch zu beanspruchen, **dadurch gekennzeichnet, dass** die Vorrichtung eine Steuerungseinheit mit einer darin implementierten Steuerungsroutine zum automatischen Einstellen des hydrodynamischen Staudrucks (pd) des von der Gaszuführung bereitgestellten Gasstroms (G) in Abhängigkeit der Vorschubgeschwindigkeit (vw) gemäß einem Verfahren nach einem der Ansprüche 1 bis 6 umfasst.

8. Vorrichtung (1) nach Anspruch 7, **dadurch gekennzeichnet, dass** die Gaszuführung (7) zum Bereitstellen des Gasstromes (G) zumindest eine auf die Werkstückoberfläche in Vorschubrichtung (V) oder entgegen der Vorschubrichtung (V) gerichtete Düse (9) aufweist, wobei die Düse (9) bezüglich einer optischen Achse (O) der Laseroptik (5) in einem Winkel ($\alpha$) ausrichtbar oder ausgerichtet ist, der weniger als 30° beträgt.

9. Vorrichtung (1) nach Anspruch 8, **dadurch gekennzeichnet, dass** die in Vorschubrichtung (V) gerichtete Düse (9) bezüglich der optischen Achse (O) in einem Winkel ($\alpha$) ausgerichtet ist, der weniger als 10° beträgt und/oder die entgegen der Vorschubrichtung (V) gerichtete Düse (9) bezüglich der optischen Achse (O) in einem Winkel ($\alpha$) ausrichtbar oder ausgerichtet ist, der weniger als 30° beträgt.

10. Vorrichtung (1) nach Anspruch 7, **dadurch gekennzeichnet, dass** die Gaszuführung (7) eine Düse (9) aufweist, die koaxial zu einer optischen Achse (O) der Laseroptik (5) ausrichtbar oder ausgerichtet ist.

11. Vorrichtung (1) nach Anspruch 10, **dadurch gekennzeichnet, dass** die Düse (9) eine einen Durchflussquerschnitt (A) begrenzende, insbesondere kreis- oder kreisringförmige Düsenmündungsfläche aufweist, die koaxial zur optischen Achse (O) der Laseroptik (5) angeordnet ist.

12. Vorrichtung (1) nach einem der Ansprüche 7 bis 11, **dadurch gekennzeichnet, dass** die Laserquelle eine Laserleistung von zumindest 3kW aufweist.

13. Vorrichtung (1) nach einem der Ansprüche 7 bis 12, **dadurch gekennzeichnet, dass** die Laserquelle dazu ausgebildet ist, Laserstrahlung (L) mit einer Wellenlänge von weniger als 10μm, insbesondere von weniger als 5μm, bevorzugt von weniger als 2μm, besonders bevorzugt zwischen 350nm und 1300nm, bereitzustellen.

**Claims**

1. Method for laser welding of workpieces (W), wherein a laser beam (L) oriented onto a workpiece surface has a radiation intensity such that the workpiece material of the at least one workpiece (W) to be welded is melted in the region of a laser focus (F), wherein a vapor capillary (D) is formed in the region of the laser focus (F), which is enclosed at least in sections by a liquid molten pool (S), wherein the laser beam (L) is moved relative to the workpiece surface in a feed direction (V) to produce a weld seam, wherein the molten pool (S) is mechanically stressed for stabilisation during the welding process by application of a gas flow (G) oriented onto the workpiece surface, wherein the laser beam (L) is moved relative to the workpiece surface in the feed direction (V) at a feed speed ($v_w$) to produce the weld seam, and a hydrodynamic dynamic pressure ($p_d$) of the gas flow (G) applied to the workpiece (W) is set, **characterized in that** the hydrodynamic dynamic pressure ($p_d$) of the gas flow (G) applied to the workpiece (W) is set as a function of the feed speed ($v_w$) in such a way that the hydrodynamic dynamic pressure ($p_d$) is at least half as much and at most four times as much as a reference dynamic pressure ($p_s$) selected proportionally to the feed speed ($v_w$), which is given by the relationship

$$p_s = k * v_w$$

wherein the proportionality factor (k) in the SI unit system is

$$k = 7{,}2 * 10^3 \frac{Pa\,s}{m}.$$

2. Method according to claim 1, **characterised in that** application of gas to the molten pool (S) is performed by means of a gas flow (G) oriented in the feed direction (V) or against the feed direction (V), wherein the flow direction of the gas flow (G) extends at an angle (α), which is less than 35°, with respect to an optical axis (O) associated with the laser beam (L).

3. Method according to claim 2, **characterised in that** the application of gas to the molten pool (S) is performed by means of a gas flow (G) oriented in the feed direction (V), which extends at an angle (α), which is less than 10°, with respect to the optical axis (O) and/or the application of gas to the molten pool (S) is performed by means of a gas flow (G) oriented against the feed direction (V), which extends at an angle (α), which is less than 30°, with respect to the optical axis (O).

4. Method according to one of the preceding claims, **characterised in that** the gas flow is oriented onto a region around the laser focus (F), the radius of which is at most twice a nozzle orifice diameter of a nozzle (9) providing the gas flow (G).

5. Method according to any one of the preceding claims, **characterized in that** the hydrodynamic dynamic pressure ($p_d$) is given by density (ρ) and a flow speed ($v_d$) of the gas by way of the relation

$$p_d = \frac{1}{2}\rho * v_g{}^2$$

, wherein the flow speed ($v_d$) results according to $v_g = \frac{VS}{A}$ from the quotient of a volume flow (VS) of the gas flow (G) and a flow cross-section (A) through which the volume flow (VS) flows.

6. Method according to one of the preceding claims, **characterised in that** the feed speed ($v_w$) is greater than 5 m/min, in particular at least 6 m/min.

7. Device (1) for laser welding, comprising

    - a carrier for at least one workpiece (W) to be welded,
    - a laser source and a laser optical unit (5) for generating a laser beam (L) oriented onto a workpiece surface,
    - a gas supply (7) for producing a gas flow (G) oriented onto the at least one workpiece surface, wherein at least the laser optical unit (5) and the carrier are moveably mounted in relation to one another in such a way that the laser beam (L) can be guided at least over a section along the workpiece surface in the feed direction (V), wherein the gas supply (7) is designed to mechanically stress a molten pool (S) formed in the region of a laser focus (F) by application of gas, **characterised in that** the device comprises a control unit having a control routine implemented therein for automatically setting the hydrodynamic dynamic pressure (pd) of the gas flow (G) provided by the gas supply as a function of the feed speed (vw) according to a method according to one of claims 1 to 6.

8. Device (1) according to claim 7, **characterised in that** the gas supply (7) has at least one nozzle (9) oriented onto the workpiece surface in the feed direction (V) or against the feed direction (V) to provide the gas flow (G), wherein the nozzle (9) can be aligned or is aligned at an angle ($\alpha$), which is less than 30°, with respect to an optical axis (O) of the laser optical unit (5).

9. Device (1) according to claim 8, **characterised in that** the nozzle (9) oriented in the feed direction (V) is aligned at an angle ($\alpha$), which is less than 10°, with respect to the optical axis (O) and/or the nozzle (9) oriented against the feed direction (V) can be aligned or is aligned at an angle ($\alpha$) which is less than 30° with respect to the optical axis (O)

10. Device (1) according to claim 7, **characterised in that** the gas supply (7) has a nozzle (9) which can be aligned or is aligned coaxially to an optical axis (O) of the laser optical unit (5).

11. Device (1) according to claim 10, **characterised in that** the nozzle (9) has a nozzle orifice surface which delimits a flow cross-section (A) and is in particular in the form of a circle or circular ring, and which is arranged coaxially to the optical axis (O) of the laser optical unit (5).

12. Device (1) according to any one of claims 7 to 11, **characterised in that** the laser source has a laser power of at least 3kW.

13. Device (1) according to any one of claims 7 to 12, **characterised in that** the laser source is designed to provide laser radiation (L) having a wavelength of less than 10$\mu$m, in particular less than 5$\mu$m, preferably less than 2$\mu$m, particularly preferably between 350nm and 1300nm.

**Revendications**

1. Procédé de soudage au laser de pièces (W), dans lequel un rayon laser (L) dirigé sur une surface de pièce présente une intensité de rayonnement telle que le matériau de la au moins une pièce (W) à souder est fondu dans la zone d'un foyer laser (F), un capillaire de vapeur (D) se formant dans la zone du foyer laser (F), qui est entouré au moins par sections par un bain de fusion liquide (S), le rayon laser (L) étant déplacé par rapport à la surface de la pièce dans une direction d'avance (V) pour produire un cordon de soudure, le bain de fusion (S) étant sollicité mécaniquement pour la stabilisation pendant l'opération de soudage par l'exposition à un flux de gaz (G) dirigé vers la surface de la pièce, le rayon laser (L) étant déplacé dans la direction d'avance (V) à une vitesse d'avance ($v_w$) pour produire le cordon de soudure par rapport à la surface de la pièce et une pression dynamique de retenue ($p_d$) du flux de gaz (G) sollicitant la pièce (W) étant réglée, **caractérisé, en ce que** la pression dynamique de retenue ($p_d$) du flux de gaz (G) sollicitant la pièce (W) est réglée en fonction de la vitesse d'avance ($v_w$) de telle sorte que la pression dynamique de retenue ($p_d$) soit au moins deux fois plus faible et au maximum quatre fois plus élevée qu'une pression de retenue de référence ($p_s$) choisie proportionnellement à la vitesse d'avance ($v_w$), qui est définie par la relation

$$p_s = k * v_w$$

le facteur de proportionnalité (k) étant donné dans le système d'unités SI

$$k = 7{,}2 * 10^3 \frac{Pa\,s}{m}.$$

2. Procédé selon la revendication 1, **caractérisé en ce que** l'alimentation du bain de fusion (S) en gaz s'effectue au moyen d'un flux de gaz (G) dirigé dans la direction d'avance (V) ou dans la direction opposée à la direction d'avance (V), la direction d'écoulement du flux de gaz (G) s'étendant par rapport à un axe optique (O) associé au rayon laser (L) selon un angle ($\alpha$) qui est inférieur à 35°.

3. Procédé selon la revendication 2, **caractérisé en ce que** l'alimentation du bain de fusion (S) en gaz s'effectue au moyen d'un flux de gaz (G) dirigé dans la direction d'avance (V), qui s'étend par rapport à l'axe optique (O) selon un angle ($\alpha$) qui est inférieur à 10° et/ou l'alimentation du bain de fusion (S) en gaz s'effectue au moyen d'un flux de gaz (G) dirigé dans la direction opposé à la direction d'avance (V), s'étendant par rapport à l'axe optique (O) selon un angle ($\alpha$) qui est inférieur à 30°.

4. Procédé selon l'une des revendications précédentes, **caractérisé en ce que** le flux de gaz est dirigé vers une zone du foyer laser (F) dont le rayon est au maximum le double d'un diamètre d'embouchure d'une buse (9) fournissant le flux de gaz (G).

5. Procédé selon l'une des revendications précédentes, **caractérisé en ce que** la pression dynamique de retenue ($p_d$) dépend d'une densité ($\rho$) et d'une vitesse d'écoulement ($v_g$) du gaz par la relation

$$p_d = \frac{1}{2}\rho * v_g{}^2$$ la vitesse d'écoulement ($v_g$) étant donnée selon $$v_g = \frac{VS}{A}$$, à partir du quotient d'un débit volumique (VS) du flux de gaz (G) et d'une section de passage (A) traversée par le débit volumique (VS).

6. Procédé selon l'une des revendications précédentes, **caractérisé en ce que** la vitesse d'avance ($v_w$) est supérieure à 5 m/min, en particulier au moins 6 m/min.

7. Dispositif (1) pour le soudage au laser, comprenant

   - un support pour au moins une pièce (W),
   - une source laser et une unité optique laser (5) pour générer un rayon laser (L) dirigé sur une surface de la pièce, - une
   - une distribution de gaz (7) pour générer un flux de gaz (G) dirigé sur la au moins une surface de la pièce, au moins l'unité optique laser (5) et le support étant montés mobiles l'un par rapport à l'autre de telle sorte que le rayon laser (L) puisse être guidé dans la direction d'avance (V) au moins sur une section le long de la surface de la pièce, la distribution de gaz (7) étant conçue pour solliciter mécaniquement un bain de fusion (S) formé dans la zone d'un foyer laser (F) en l'alimentant en gaz, **caractérisé en ce que** le dispositif comprend une unité de commande avec une routine de commande mise en oeuvre dans celle-ci pour régler automatiquement la pression dynamique de retenue ($p_d$) du flux de gaz (G) fourni par l'alimentation en gaz en fonction de la vitesse d'avance ($v_w$) selon un procédé selon l'une des revendications 1 à 6.

8. Dispositif (1) selon la revendication 7, **caractérisé en ce que** la distribution de gaz (7) présente, pour la mise à disposition du flux de gaz (G), au moins une buse (9) orientée sur la surface de la pièce dans la direction d'avance (V) ou dans la direction opposée à la direction d'avance (V), la buse (9) pouvant être orientée ou étant orientée par rapport à un axe optique (O) de l'unité optique laser (5) selon un angle ($\alpha$) qui est inférieur à 30°.

9. Dispositif (1) selon la revendication 8, **caractérisé en ce que** la buse (9) orientée dans la direction d'avance (V) est orientée par rapport à l'axe optique (O) selon un angle ($\alpha$) qui est inférieur à 10° et/ou la buse (9) orientée dans la direction opposée à la direction d'avance (V) peut être orientée ou est orientée par rapport à l'axe optique (O) selon un angle ($\alpha$) qui est inférieur à 30°.

10. Dispositif (1) selon la revendication 7, **caractérisé en ce que** la distribution en gaz (7) comporte une buse (9) qui peut être orientée ou qui est orientée coaxialement à un axe optique (O) de l'unité optique laser (5).

11. Dispositif (1) selon la revendication 10, **caractérisé en ce que** la buse (9) présente une surface d'embouchure de buse délimitant une section transversale d'écoulement (A), en particulier en forme de cercle ou d'anneau de cercle, qui est disposée coaxialement à l'axe optique (O) de l'unité optique laser (5).

12. Dispositif (1) selon l'une des revendications 7 à 11, **caractérisé en ce que** la source laser présente une puissance laser d'au moins 3kW.

13. Dispositif (1) selon l'une des revendications 7 à 12, **caractérisé en ce que** la source laser est configurée pour fournir un rayonnement laser (L) ayant une longueur d'onde inférieure à 10$\mu$m, notamment inférieure à 5$\mu$m, de préférence inférieure à 2$\mu$m, de manière particulièrement préférée comprise entre 350nm et 1300nm.

## FIG 1

## FIG 2

## FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **FABBRO et al.** Experimental study of the dynamical coupling between the induced vapour plume and the melt pool for Nd-Yag CW laser welding. *Journal of Physics D: Applied Physics,* 2006, vol. 39, 394-400

- **FABBRO et al.** Melt Pool and Keyhole Behaviour Analysis for Deep Penetration Laser Welding. *Journal of Physics D: Applied Physics,* 2010, vol. 43, 445-501